# EUROPEAN PATENT APPLICATION

(11) **EP 4 729 395 A1**
(43) Date of publication of application: **22.04.2026**
(21) Application number: 24207140.5
(22) Date of filing: 17.10.2024
(51) Int. Cl.: B62D 7/18

(54) **STEERING KNUCKLE ASSEMBLY**

(71) Applicant: Meritor Heavy Vehicle Systems Cameri SpA, 28062 Cameri (NO) (IT)
(72) Inventor: Manjithaya, Guru Deepak R., 28062 Cameri (IT); Tiziani, Eugenio, 28062 Cameri (IT)
(74) Representative: Whitfield, Jack Stephen

(57) **Abstract**

A steering knuckle assembly comprising: a steering knuckle comprising a first arm and a second arm; a first kingpin comprising a threaded portion and a bearing portion coaxial therewith for pivotally mounting the steering knuckle to an axle or suspension component; and a second kingpin distinct from the first kingpin. The first arm comprises a first threaded hole for mounting the first kingpin via the threaded portion and the second arm is arranged to mount the second kingpin.

## Description

### FIELD

The present disclosure relates to a steering knuckle assembly. In addition, the present disclosure relates to an axle and a kingpin.

### BACKGROUND

Steering knuckles of drive steer axles typically require upper and lower kingpins which define a spacing between them in order that a drive shaft may extend from a differential to a wheel hub, so as to transmit torque to the wheel and propel a vehicle to which the axle is mounted. It is common that a universal joint or constant velocity joint is provided in this spacing in order that drive can occur whilst the vehicle is being steered. The upper and lower kingpins are provided with a cap or flange that is bolted onto the knuckle using multiple (e.g. three or four) fasteners, such as bolts to secure the kingpins.

Drive steer axles are also commonly braked, and the brake assembly is often mounted to the steering knuckle. The combination of steer, drive and braking components at the steering knuckle means that space is limited and access to parts for assembly and/or servicing is restricted. In turn, this can result in additional time being required to perform initial assembly and/or servicing operations, leading to increased assembly and/or servicing expense, which is undesirable.

The present disclosure seeks to overcome, or at least mitigate, the problems of the prior art.

### SUMMARY

A first aspect of the present disclosure provides a steering knuckle assembly comprising: a steering knuckle comprising a first arm and a second arm; a first kingpin comprising a threaded portion and a bearing portion coaxial therewith for pivotally mounting the steering knuckle to an axle or suspension component; and a second kingpin distinct from the first kingpin. The first arm comprises a first threaded hole for mounting the first kingpin via the threaded portion. The second arm is arranged to mount the second kingpin.

Advantageously, this enables a more compact kingpin arrangement to be provided, which may allow easier access to other parts at the wheel-end, such as braking components, that may allow easier assembly and/or maintenance.

A first anti-rotation feature may be provided to inhibit rotation of the first kingpin relative to the first arm.

Advantageously, this allows a predetermined spacing and/or pre-load to be provided between the steering knuckle and the component it is mounted to.

The first aperture may comprise a shoulder. The first kingpin may comprise a complementary shoulder, so as to define an axial stop therebetween.

Advantageously, this may further assist in setting a predetermined spacing and/or pre-load.

The steering knuckle assembly may further comprise a shim located between the shoulder and the complementary shoulder.

Advantageously, this may further assist in setting a predetermined spacing and/or pre-load.

The steering knuckle assembly may further comprise a tapered roller bearing mounted to the bearing region of the first kingpin.

Advantageously, this allows vertical play to be minimised or eliminated in the steering knuckle assembly in conjunction with axial positioning of the first kingpin.

The first kingpin may comprise a female interface for the fitting of a complementary tool to mount or de-mount the first kingpin.

Advantageously a female interface permits the first kingpin to have a reduced height projecting above the first arm when mounted thereto, further improving access to other parts of the wheel end.

The anti-rotation arrangement feature may comprise a fastener, for example a bolt, arranged to engage a portion of the first kingpin.

Advantageously this may provide a simple way of providing an anti-rotation feature.

The fastener may engage a perimeter portion of the first kingpin.

Advantageously, this enables a convenient positioning of the fastener.

The second kingpin may be threaded. The second arm may be provided with a threaded second hole to mount the second kingpin.

Advantageously, this further enables a more compact kingpin arrangement to be provided, which may allow easier access to other parts at the wheel-end, such as braking components, that may allow easier assembly and/or maintenance. It may also enable an identical kingpin to be used as the first and second kingpins, reducing tooling and inventory costs.

A retaining ring may be provided to set an axial position of the second kingpin.

Advantageously, this may enable the second kingpin to set a known datum position.

The steering knuckle assembly may further comprise a brake mounting bracket proximate the first kingpin.

The steering knuckle assembly may further comprise a fastener arranged to mount a brake to the brake mounting bracket, an axis of the fastener extending over the first kingpin. The fastener may be fitted and removed along the axis with a clearance to the first kingpin when the first kingpin is fitted in the kingpin hole.

Advantageously, the mounting of a brake to a bracket in this way is a particular situation in which a kingpin of the present teaching allows for a more flexible assembly and disassembly.

A spacing may be provided intermediate the first and second kingpins through which a driveshaft may extend.

Advantageously, the use of two distinct kingpins enables them to be spaced apart and allow a driveshaft to extend from an axle through the kingpin and to provide drive to a wheel mounted to the kingpin.

A further aspect of the present disclosure provides an axle comprising first and second axle arms providing first and second corresponding axle holes and a steering knuckle assembly according to any preceding claim, wherein the first and second kingpins are mounted to the first and second axle holes.

A still further aspect of the present disclosure provides a kingpin for mounting to a drive steer axle, the kingpin comprising: a threaded portion; a bearing portion axially aligned with the threaded portion; and a female interface axially aligned with the threaded portion for receiving a complementary tool to mount the kingpin to a knuckle of the drive steer axle via the threaded portion.

### BRIEF DESCRIPTION OF THE DRAWINGS

Embodiments will now be described with reference to the accompanying drawings, in which:
FIG. 1 is a schematic view of an axle according to the present disclosure;
FIG. 2 is a partial plan view of a wheel end assembly of the axle;
FIG. 3 is an underside view of the wheel end of FIG. 2;
FIG. 4 is a vertical cross-section through the wheel end of FIG. 2;
FIG. 4A is an enlarged view of box A of Fig 4; and
FIG. 5 is an exploded view of the wheel end of FIG. 2.

### DETAILED DESCRIPTION OF EMBODIMENT(S)

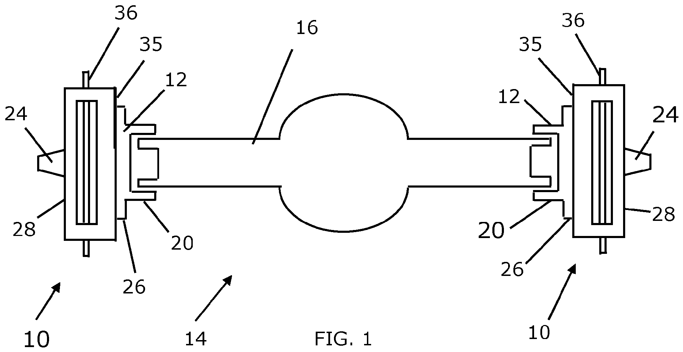

Referring to FIG. 1, a schematic diagram of an axle 14 is shown, comprising two opposing wheel end assemblies 10 mounted to an axle beam 16. The axle 14 is a drive steer axle. The axle 14 may be of the type utilised in heavy duty on- or off-highway vehicles, such as an axle of a truck, bus, agricultural vehicle, mining equipment, military transport or weaponry vehicle, or cargo loading equipment for land, air, or marine vessels, for example. The vehicle may include a trailer for transporting cargo in one or more embodiments.

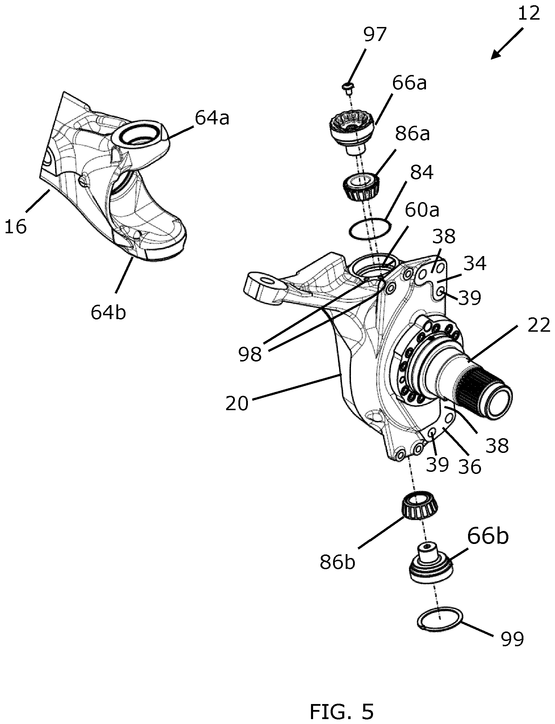

Each wheel end assembly 10 may be configured to rotatably support a vehicle wheel that may support a tire. In addition, the wheel end assembly 10 may include one or more components that may facilitate braking of the wheel or changing the direction of travel of the vehicle. In at least one configuration and as is best shown with reference to FIG. 1 to FIG. 5, the wheel end assembly 10 may include a knuckle 20, a spindle 22, a hub 24, a brake mounting bracket 26 (sometimes referred to as a torque plate), and a disc brake assembly 28. The disc brake assembly comprises a brake caliper 35 and a brake rotor 36. In other embodiments (not shown) the knuckle may mount a drum brake assembly via a brake spider.

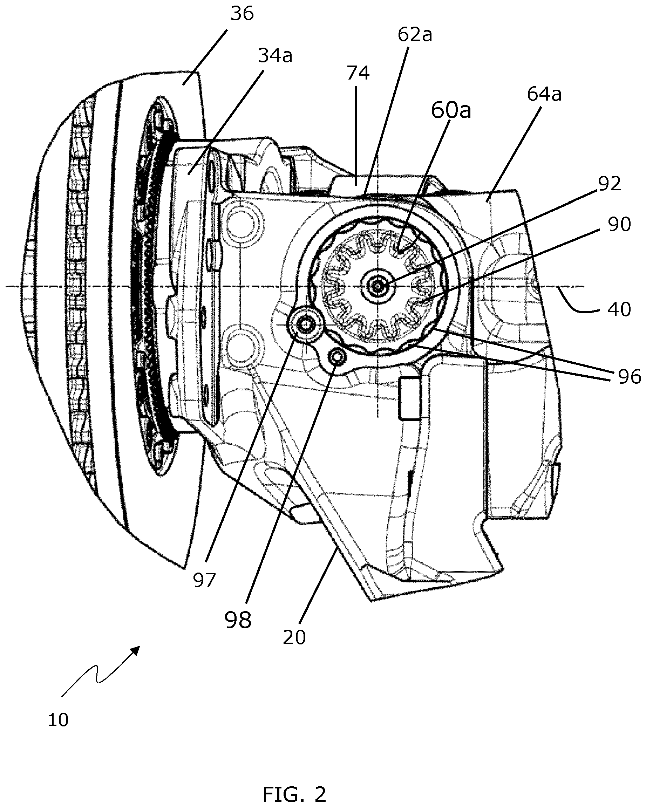

Referring primarily to FIG. 2 to FIG. 4A, one wheel end assembly 10 is now described in more detail. However, the other wheel end assembly of the axle 14 is a substantially identical mirror image of the first.

The knuckle 20 may support various components of the wheel end assembly 10 . The knuckle 20 is provided in a steerable configuration in this embodiment, that may be used to steer or change the direction of the vehicle.

In at least one configuration, the knuckle 20 may include a spindle mounting surface 32, and first and second mounting bosses 34a and 34b that form the brake mounting bracket 26.

The spindle mounting surface 32 may extend around an axis 40 and/or an opening 42 in the knuckle 20. A set of spindle mounting holes 44 may be provided in the spindle mounting surface 32. The spindle mounting holes 44 may be spaced apart from each other and may be radially disposed about the axis 40. In addition, the spindle mounting holes 44 may be threaded to secure the spindle 22 using suitable fasteners 46.

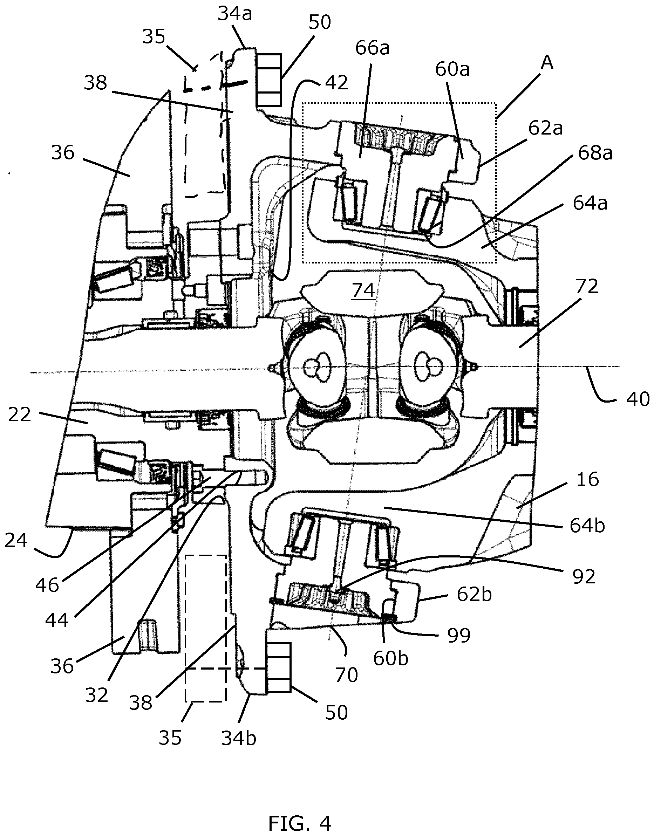

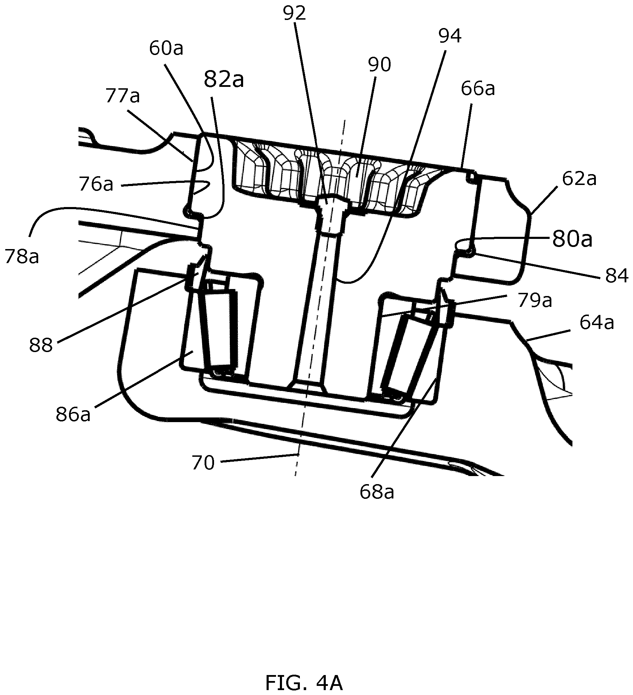

The first and second mounting bosses 34a, 34b facilitate mounting of part of the disc brake assembly 28 to the knuckle. The mounting bosses 34a, 34b extend from the spindle mounting surface 32 in opposing directions transverse to the axis 40. Each boss 34, 34b comprises a planar surface 38 facing generally outboard and at least one through bore 39 extending generally parallel to the axis 40. The through bores 39 allow the brake assembly 28 (shown in broken lines in FIG. 4) to be mounted to the bosses 34a, 34b via bolts 50 that are inserted from an inboard side of the bosses 34a, 34b. As such the heads of the bolts 50 are inboard of the bosses 34a, 34b, as is visible in FIG. 4.

The knuckle 20 comprises at least one kingpin hole, in this embodiment two kingpin holes 60a and 60b, which receive a first kingpin 66a and second kingpin 66b respectively. In this embodiment the knuckle 20 comprises first and second arms 62a and 62b extending inboard of the spindle mounting surface 32, in which the kingpin holes 60a and 60b are provided, and which extend around corresponding arms 64a and 64b of the axle beam 16. The axle arms 64a, 64b may be provided with corresponding axle holes 68a and 68b to receive the kingpins 66a, 66b to couple the knuckle 20 to the axle beam 16 such that the knuckle 20 may pivot about the axle beam 16 on a steer axis 70.

In this embodiment the kingpin holes 60a, 60b are through holes and the axle holes 68a, 68b are blind holes. In this embodiment the steer axis is inclined to provide a negative camber, but in other embodiments, this need not be the case.

The use of two separate kingpins 66a, 66b provides a space for a drive shaft 72 to extend from the axle beam 16, through the knuckle 20 and spindle 22 and be coupled to the hub 24 to apply torque to the hub. The first kingpin 66a in this embodiment is located at the top of the knuckle 20 and the second kingpin 66b is located at the bottom of the knuckle, but in other embodiments this may be reversed. The drive shaft 72 may comprise a universal joint 74 or the like where axes 40 and 70 intersect to permit simultaneous drive and steering.

Referring now in particular to FIG. 4A, an enlarged view of the first kingpin hole 60a, first axle hole 68a and first kingpin 66a is shown. It can be seen that the first kingpin hole 60a is counterbored, having a larger diameter portion 76a remote from the axle hole 68a and a smaller diameter portion 78a proximate the axle hole. An annular shoulder 80a is defined therebetween. The larger diameter portion 76a is threaded in this embodiment and receives a complementary threaded region 77a of the first kingpin 66a.

The first kingpin 66a is formed as a single monolithic pin in this embodiment, which also reduces in diameter in at least one step from the threaded region 77a, defining a corresponding shoulder 82a to face the shoulder 80a of the kingpin hole 60a, and a cylindrical bearing region 79a with a reduced diameter. The reduced diameter of the bearing region 79a allows a suitably sized bearing to be used that fits through the kingpin hole 60a to assist with assembly.

In this embodiment, one or more shims 84 may be interposed between the shoulders as described in more detail below.

A first bearing 86a, in this embodiment a tapered roller bearing, is mounted to the bearing region 79a of the first kingpin 66a within the axle hole 68a to allow for the pivoting of the knuckle assembly 12 with minimal resistance.

A lip seal 88 may be mounted to a perimeter of a mouth of the axle hole 68a and seals against the exterior of the kingpin 66a in a gap between the knuckle arm 62a and the axle arm 64a, and inhibits the ingress of foreign matter into the first bearing 86a.

The exposed end face of the first kingpin 66a is provided with a female interface 90 for the fitting of a complementary tool to tighten the kingpin 66a onto the first knuckle arm 62a via the threads. The female interface comprises twelve lobes, in this embodiment, for engagement with a complementary drive - e.g. a spline drive or double hex drive. In other embodiments any suitable interface may be used such as Torx, Pentalobe etc. An advantage of this arrangement is that the first kingpin 66a does not have to project substantially above the surface of the knuckle arm 62a. For example, the first kingpin 66a may project 3mm or less above the surface of the knuckle arm, for example 2mm or less above the surface. As can be seen in FIG. 4, this enables the bolt 50 to be loosened and withdrawn along its axis, with being blocked by the kingpin 66a.

A grease nipple 92 may be fitted to the end face and leads to an axially arranged grease conduit 94, that is able to supply grease to the first bearing 86a via a depression in the base of the axle hole 68a.

To hold the first kingpin 66a in place, an anti-rotation feature is provided in this embodiment. As depicted in FIG. 2 in particular, the upper perimeter or rim of the first kingpin 66a is provided with a series of scalloped or curved depressions 96. A flanged bolt 97 is securable in one of two complementary threaded bores 98 provided on the knuckle arm 62a adjacent to the perimeter of the kingpin 66a. The flanged head of the bolt 97 is of a complementary shape to the depressions 96, so that when they are aligned, the bolt 97 inhibits rotation of the kingpin 66a. The threaded bores 98 are located around the perimeter with half a width of the one of the depressions 96 offset between them. This enables the bolt 97 to be fitted in either bore 98 and set the position of the kingpin 66a in 11.25° increments in this embodiment. In other embodiments, only a single bore 98 may be provided, or more than two bores with smaller offsets, depending upon the accuracy of positioning required. The locations of the bores may be adjusted to avoid clashing with other components as required. This anti-rotation feature is simple to implement, and easily accessible during assembly. In still further embodiments, other anti-rotation features may be used, such as a key and keyway, or set screw arrangement (not shown).

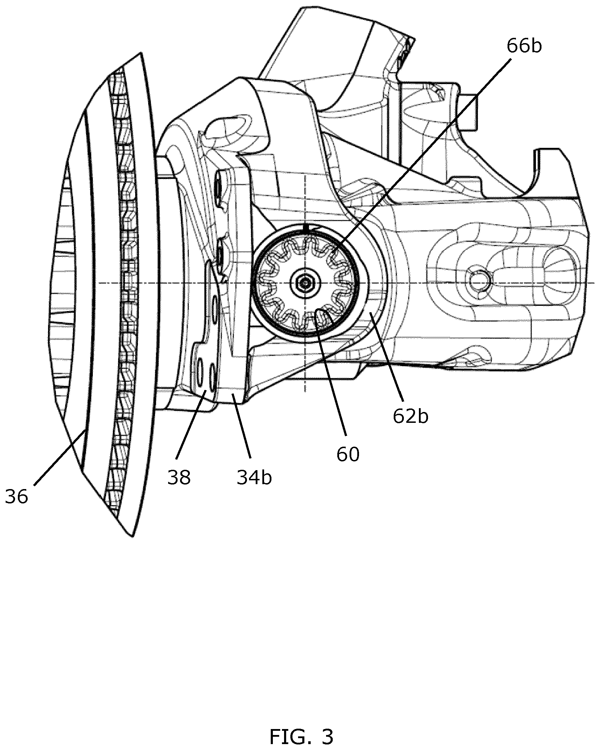

Turning now to FIG. 3 and FIG. 4 in particular, in this embodiment, the second kingpin 66b is essentially identical to the first kingpin 66a, having a similar taper roller bearing 86b to the bearing 86a of the first kingpin 66a mounted thereto, and a similar lubrication arrangement being utilised too. The second kingpin 66b is however retained differently in this embodiment. A retaining ring 99 (circlip or snap ring) is mounted in an annular groove in the kingpin hole 60b. The retaining ring 99 allows the position of the second kingpin 66b to be set without the use of any shims, and acts as an anti-rotation feature.

Assembly of the knuckle assembly 12 is as follows: With the first and second kingpin holes 60a, 60b aligned with the first and second axle holes 68a, 68b respectively, the second kingpin 66b together with its corresponding bearing 86b are screw fitted to the second kingpin hole 60b such that the bearing 86b is seated in the second axle hole. The second kingpin 66b is screwed past the annular groove of the kingpin hole and the retaining ring 99 is fitted. The second kingpin 66b is then backed-off until it comes to rest against the retaining ring 99, thereby setting a datum position.

A suitable thickness of shim 84 to obtain a required pre-load for the bearings 86a, 86b is fitted to the first kingpin 66a and the first kingpin is screwed into the first kingpin hole 68a until the abutting of the shim 84 with the shoulders 80 and 82 prevents further rotation, and the pre-load is achieved. The bolt 97 is then partially tightened into to the bore 98 that is nearest to being aligned with one of the depressions 96. The first kingpin 66a may be adjusted slightly to bring one of the depressions 96 into alignment with the head of the bolt 97, before the bolt is fully tightened into the depression 96. The unused bore 98 may be capped with a suitable cover (not shown).

In contrast with prior art knuckle assemblies of drive steer axles having a cap and fasteners mounted on top of the knuckle arms, in particular, the first and second kingpins 66a, 66b do not restrict access to the brake mounting bosses 34a, 34b,. As such, the brake caliper 35 may be mounted to the bosses 34a, 34b using the bolts 50 fitted from the inboard side after the kingpins 66a, 66b have been assembled without being blocked by either the first or the second kingpin. This provides more flexibility for the order of assembly of components and may also ease maintenance of the disc brake assembly 28 or other components of the wheel end assembly in the in the field, by avoiding the need for the first and second kingpins 66a, 66b to be disassembled first.

Where the word 'or' appears, this is to be construed to mean 'and/or' such that items referred to are not necessarily mutually exclusive and may be used in any appropriate combination.

Although the present disclosure has been described above with reference to one or more preferred embodiments, it will be appreciated that various changes or modifications may be made without departing from the scope of the invention as defined in the appended claims.

For example, the disclosure may apply to non-drive axles, axles with wheel-end motors, and/or axles with independent suspension, rather than beam axles. In the latter case, the axle holes may be replaced with similar holes at the end of a suitable suspension arm.

The first and second kingpins may utilise plain bushings or non-tapered bearings, for example cylindrical roller bearings, needle roller bearings or spherical roller bearings, for example. The locations of the first and second kingpins may be reversed. The kingpins may be assembled from multiple parts, rather than being a single pin. The second kingpin may be integral with the second arm. The axle holes may be through holes rather than blind holes. The kingpins may use any suitable alternative lubrication arrangements.

## Claims

1. A steering knuckle assembly comprising:
a steering knuckle comprising a first arm and a second arm;
a first kingpin comprising a threaded portion and a bearing portion coaxial therewith for pivotally mounting the steering knuckle to an axle or suspension component; and
a second kingpin distinct from the first kingpin;
wherein the first arm comprises a first threaded hole for mounting the first kingpin via the threaded portion and the second arm is arranged to mount the second kingpin.

2. The steering knuckle assembly of claim 1, wherein a first anti-rotation feature is provided to inhibit rotation of the first kingpin relative to the first arm.

3. The steering knuckle assembly of claim 1 or 2, wherein the first aperture comprises a shoulder and the first kingpin comprises a complementary shoulder, so as to define and axial stop therebetween.

4. The steering knuckle assembly of claim 3, further comprising a shim located between the shoulder and the complementary shoulder.

5. The steering knuckle assembly of any preceding claim further comprising a tapered roller bearing mounted to the bearing region of the first kingpin.

6. The steering knuckle assembly of any preceding claim, wherein the first kingpin comprises a female interface for the fitting of a complementary tool to mount or de-mount the first kingpin.

7. The steering knuckle assembly of claim 2 or any one of claims 3 to 6 when dependent upon claim 2, wherein the anti-rotation arrangement feature comprises a fastener, for example a bolt, arranged to engage a portion of the first kingpin.

8. The steering knuckle assembly of claim 7, wherein the fastener engages a perimeter portion of the first kingpin.

9. The steering knuckle assembly of any preceding claim, wherein the second kingpin is threaded and the second arm is provided with a threaded second hole to mount the second kingpin.

10. The steering knuckle assembly of any preceding claim, wherein a retaining ring is provided to set an axial position of the second kingpin.

11. The steering knuckle assembly of any preceding claim, further comprising a brake mounting bracket proximate the first kingpin.

12. The steering knuckle assembly of claim 11, further comprising a fastener arranged to mount a brake to the brake mounting bracket, an axis of the fastener extending over the first kingpin, and wherein the fastener may be fitted and removed along the axis with a clearance to the first kingpin when the first kingpin is fitted in the kingpin hole.

13. The steering knuckle assembly of any preceding claim wherein a spacing is provided intermediate the first and second kingpins through which a driveshaft may extend.

14. An axle comprising first and second axle arms providing first and second corresponding axle holes and a steering knuckle assembly according to any preceding claim, wherein the first and second kingpins are mounted to the first and second axle holes.

15. A kingpin for mounting to a drive steer axle, the kingpin comprising:
a threaded portion;
a bearing portion axially aligned with the threaded portion; and
a female interface axially aligned with the threaded portion for receiving a complementary tool to mount the kingpin to a knuckle of the drive steer axle via the threaded portion.
